# EUROPÄISCHE PATENTSCHRIFT

(11) **EP 3 707 496 B1**
(45) Veröffentlichungstag und Bekanntmachung des Hinweises auf die Patenterteilung: **26.10.2022**
(21) Anmeldenummer: 18800915.3
(22) Anmeldetag: 08.11.2018
(51) Int. Cl.: G01N 21/31, G01N 21/27, G01J 3/28

(54) **IDENTIFIZIERUNG EINES ODER MEHRERER SPEKTRALER MERKMALE IN EINEM SPEKTRUM EINER PROBE FÜR EINE INHALTSSTOFFANALYSE**
IDENTIFICATION OF ONE OR MORE SPECTRAL FEATURES IN A SPECTRUM OF A SAMPLE FOR A CONSTITUENT ANALYSIS
IDENTIFICATION D'AU MOINS UNE CARACTÉRISTIQUE SPECTRALE DANS UN SPECTRE D'UN ÉCHANTILLON POUR ANALYSE DE CONSTITUANTS

(30) Priorität: 10.11.2017 DE 102017220103
(43) Veröffentlichungstag der Anmeldung: 16.09.2020
(73) Patentinhaber: Fraunhofer-Gesellschaft zur Förderung der angewandten Forschung e.V., 80686 München (DE); Karlsruher Institut für Technologie (KIT), 76131 Karlsruhe (DE)
(72) Erfinder: KRAUSE, Julius, 76137 Karlsruhe (DE); GRUNA, Robin, 76530 Baden-Baden (DE)
(74) Vertreter: Pfenning, Meinig & Partner mbB
(86) Internationale Anmeldenummer: PCT/EP2018/080683
(87) Internationale Veröffentlichungsnummer: WO 2019/092147

(56) Entgegenhaltungen:
- DE-A1-102012 217 676
- US-A1- 2002 146 160
- HSU PAI-HUI: "Spectral feature extraction of hyperspectral images using wavelet transform", DISSERTATION FOR DOCTOR OF PHILOSOPHY - DEPARTMENT OF SURVEYING ENGINEERING, NATIONAL CHENG KUNG UNIVERSITY, TAINAN, TAIWAN, 2003, Seiten 1-158, XP002534022,
- FU Z Y ET AL: "Invariant Object Material Identification via Discriminant Learning on Absorption Features", COMPUTER VISION AND PATTERN RECOGNITION WORKSHOP, 2006 CONFERENCE ON NEW YORK, NY, USA 17-22 JUNE 2006, 2006, XP055549366, Piscataway, NJ, USA DOI: 10.1109/CVPRW.2006.112 ISBN: 978-0-7695-2646-1
- BRUCE L M AND LI J: "Wavelets for computationally efficient hyperspectral derivative analysis", IEEE Transactions on Geoscience and Remote Sensing, 2001, Seiten 1540-1546, XP055549375, New York DOI: 10.1109/36.934085 Gefunden im Internet: URL:https://ieeexplore.ieee.org/ielx5/36/2 0213/00934085.pdf?tp=&arnumber=934085&isnu mber=20213 [gefunden am 2019-01-31]
- Zhouyu Fu ET AL: "On Automatic Absorption Detection for Imaging Spectroscopy: A Comparative Study", IEEE Transactions on Geoscience and Remote Sensing, vol. 45, no. 11, 1 November 2007 (2007-11-01), pages 3827-3844, XP055549353, USA ISSN: 0196-2892, DOI: 10.1109/TGRS.2007.903402

## Beschreibung

Die Erfindung betrifft eine Vorrichtung und ein Verfahren zum Identifizieren eines oder mehrerer spektraler Merkmale in einem Spektrum zumindest einer Probe für eine Inhaltsstoffanalyse der Probe.

Besonders im Bereich der Analyse und Qualitätskontrolle von Lebensmitteln und Agrarprodukten, aber auch in vielen anderen Bereichen, beispielsweise in medizinischen Analysen wie einer Blutzuckerbestimmung oder im Bereich von Bodenanalysen oder Analysen von Schüttgütern in Sortieranlagen, ist die optische Spektroskopie eine schnelle und zerstörungsfreie Messmethode. Ein spektraler Sensor erfasst dabei ein Lichtspektrum, beispielsweise ein Transmissions-, Reflexions- oder Emissionsspektrum, und wandelt es in ein digitales Signal mit einer Anzahl N von diskreten Werten y(Lᵢ) für die Wellenlängen Lᵢ mit i = 1, ... N um. Die Menge der diskreten Werte y(Lᵢ) kann dann als Spektrum Y bezeichnet werden.

Durch eine Analyse des gemessenen Spektrums Y, der gemessenen spektralen Signatur, kann die Abhängigkeit des Spektrums von chemischen Eigenschaften der Probe modelliert werden und so deren Inhaltsstoffe bestimmt werden. Das die Abhängigkeit beschreibende Modell wird auch als chemometrisches Modell bezeichnet. Die optische Spektroskopie in Kombination mit dem chemometrischen Modell ermöglicht den Verzicht auf umfangreiche chemische Analysemethoden, welche in der Regel mit einer Zerstörung der Probe(n) einhergehen. So kann durch optische Spektroskopie z.B. eine Analyse von Qualität, Haltbarkeit oder Quantifizierung von Inhaltsstoffen im Regelbetrieb, "in-line" in einer Fertigungsstraße durchgeführt werden.

Allerdings erfordert das Erstellen chemometrischer Modelle eine große Zahl unterschiedlicher Proben und Messungen und ist üblicherweise mit einem hohen Aufwand und großen Kosten verbunden. Um beispielsweise eine Korrelation zwischen der Keimbelastung von Hackfleisch mit Veränderungen in der spektralen Signatur zu bestimmen, müssen Proben aus unterschiedlichen Quellen mit jeweiliger unterschiedlicher Lagerdauer erstellt und die Keimbelastung durch ein Referenzanalyseverfahren ermittelt werden.

Zudem wird die Analyse der spektralen Signatur durch Überlagerungen verschiedener Signale unterschiedlichen Ursprungs erschwert. Insgesamt enthält eine spektrale Signatur die überlagerten Signale aus chemischen und physikalischen Eigenschaften und wird durch die Umgebung, beispielsweise spezifische Sensoreigenschaften des genutzten spektralen Sensors und geometrische Eigenschaften des Spektroskops gestört. Faktoren, welche die spektrale Signatur beeinflussen, sind folglich beispielsweise:
- Chemische Eigenschaften der Probe, welche durch Absorption und Fluoreszenzeffekte bestimmt sind, die mit spezifischen Anregungen von Elektronenzuständen und Molekülschwingungen zusammenhängen und so eine materialspezifische spektrale Signatur erzeugen.
- Physikalische Eigenschaften, welche beispielsweise durch die Probenform, eine Oberflächenbeschaffenheit der Probe oder, bei einer in Pulverform vorliegenden Probe, von einem Mahlgrad des Pulvers abhängen sowie weiteren Eigenschaften abhängen.
- Eigenschaften des genutzten spektralen Sensors, welche beispielsweise durch unterschiedliche Signalstärke oder verschiedene spektrale Messbereiche bedingt sind, erschweren die Vergleichbarkeit von Messergebnissen unterschiedlicher Messvorrichtungen.
- Geometrische Eigenschaften des Spektroskops wie beispielsweise eine veränderliche Geometrie zwischen dem Messobjekt und dem Sensor bzw. der Lichtquellen und dem Sensor verändern ebenfalls die gemessene spektrale Signatur und erschweren so ebenfalls die Vergleichbarkeit unterschiedlicher Messvorrichtungen.

Diese und andere Störungen bzw. Überlagerungen haben zur Folge, dass spektrale Messungen mit verschiedenen Geräten selbst wenn sie vom selben Hersteller hergestellt sind und dem gleichen Typ oder der gleichen Baureihe angehören, nicht identisch und somit nicht direkt vergleichbar sind. Dies führt dazu, dass chemometrische Modelle, über welche aus der gemessenen spektralen Signatur, dem gemessenen Spektrum, eine Inhaltsstoffanalyse jeweiliger Proben durchgeführt werden kann, in der Regel gerätespezifisch sind und nicht für die Auswertung von Messungen von anderen spektrokopischen Messgeräten genutzt werden können. Um nun spektrokopische Messungen mit verschiedenen Sensoren oder verschiedenen Geräten in einer Datenbank nutzbar zu machen oder sensorübergreifende Analysemodelle entwickeln zu können, muss eine Vergleichbarkeit der optischen Messdaten über ein geeignetes Verfahren hergestellt werden.

Überdies erzeugen spektrale Sensoren und damit Spektroskope hochdimensionale Daten, die üblicherweise eine Redundanz aufweisen. Folglich wird für viele Aufgabenstellungen, beispielsweise die Identifikation bestimmter vorgegebener Stoffe in einer Probe, nicht das gesamte Spektrum benötigt, sondern es genügen einzelne oder mehrere vorgegebene spezifische spektrale Merkmale. Durch die Extraktion solcher spezifischer Merkmale kann beispielsweise der benötigte Speicherplatz für Datenbanken verringert werden. Derzeit eingesetzte Verfahren zur Kompression und/oder Dimensionsreduktion der Sensordaten wie z.B. die bekannte Hauptkomponentenanalyse (Primary Component Analysis; PCA) haben den Nachteil, dass durch die jeweilige Transformation die Interpretierbarkeit der Daten verloren geht.

Bisherige Verfahren zur Analyse spektraler Signaturen sind, wie beispielsweise dem 2006 bei Wiley erschienenen Buch "Multivariate Datenanalyse: Für die Pharma-, Bio- und Prozessanalytik" von W. Kessler zu entnehmen, datengetrieben. Die Werte y(Lᵢ) ergeben einen Punkt in einem N-dimensionalen Musterraum. Der betrachtete Merkmalsraum, welcher zur Analyse der Inhaltsstoffe genutzt wird, ist in der Regel mit diesem Musterraum identisch. Dabei ist es allerdings gängige Praxis, lediglich einen niedrigdimensionalen Unterraum des Musterraums als Merkmalsraum zu verwenden. Häufig wird eine Hauptkomponentenanalyse zur Abbildung in den Unterraum verwendet.

In einem Analysemodell wird sodann der Merkmalsraum interpretiert. Beispielsweise können Materialien und Inhaltsstoffe der Probe durch die Bestimmung von Distanzmaßen innerhalb des Merkmalsraums und die Definition bestimmter Volumina quantifiziert werden. Gängige Verfahren zur Klassifizierung sind dabei unter anderem Stützvektormaschinen (Support Vector Machines, SVM), die Klassifikation mit mehreren unkorrellierten Entscheidungsbäumen, die sogenannte Random Forrest-Methode, oder mittels einer Regression, beispielsweise der PLSR-Regression.

Werden nun unterschiedliche Sensoren oder Geräte verwendet, so wird der neue Sensor, der Sekundärsensor, in seinen Eigenschaften an einen anderen Sensor, den Primärsensor, angeglichen. Dies erfordert Messungen von verschiedenen identischen Referenznormalen, wie es beispielsweise in dem Review-Artikel "Transfer of Multivariate Calibration Models: A Review" von Robert N. Fodale et al. in Chemometrics and Intelligent Laboratory Systems 64 (2002) auf den Seiten 181 - 192 beschrieben ist. Auch WaveletTransformationen sind zur Extraktion von Merkmalen, insbesondere zur Peak-Detektion sowie zur Kompression von Daten bereits bekannt. Im Kontext der Analyse spektrokopischer Daten sei hier beispielsweise auch auf den Artikel "Comparison of Public Peak Detection Algorithms for MALDI Mass Spectrometry Data Analysis" von Chao Yang et al. verwiesen, welches im Januar 2009 in BMC Bioinformatics erschienen ist. Ein weiteres Verfahren zur Trennung zwischen Streu- und Absorptionsparametern ist Kuwelka-Munk-Theorie. Dieses Verfahren basiert jedoch auf mehreren Messungen einer identischen Probe.

In der taiwanesischen Doktorarbeit von Hsu Pai-Hui: "Spectral Feature Extraction ofHyperspectral Images Using Wavelet Transform", National Cheng Kung University, 2003, wird eine sogenannte "scale space"-Methode zur Identifikation von spektralen Fingerabdrücken beschrieben, bei welcher Spektren von Wiesenlandschaften ("grass land") in einem Wellenlängen-Unschärfen-Raum ("t-σ space") analysiert. Dabei können Gratlinien, welche durch eine Reihe von in der Unschärfen-Dimension ineinander übergehenden lokalen Maxima in der Wellenlängen-Dimension bestimmt sind ("modulus maximum lines"), oder aber die durch Nulldurchgänge im Wellenlängen-Unschärfenraum bestimmte Linien als "Fingerabdrücke" identifiziert werden.

DE 10 2012 217676 A1 beschreibt ein Verfahren zur Identifikation der Zusammensetzung einer Probe mit den Schritten eines a) Leitens einer Messlichtstrahlung auf eine Probe, b) Wellenlängenabhängigen Detektierens von Lichtsignalen, die aus einer Interaktion der Probe mit der Messlichtstrahlung resultieren, um ein Probenspektrum zu erhalten, c) Klassifizierens des Probenspektrums in eine vorgegebene Klasse und d) quantitativen Bestimmens mindestens eines Bestandteils der Probe. Dabei wird auch vorgeschlagen, einen Bestandteil der Probe auf vektorieller Basis zu quantifizieren. Dazu werden das Probenspektrum sowie eine Kalibrierfunktion als Vektor dargestellt, welche dann derart miteinander multipliziert werden, dass das Skalarprodukt der beiden Vektoren erhalten wird. Bei geeigneten Rahmenbedingungen ergibt sich bei einer derartigen Multiplikation der entsprechenden Vektoren, d. h. aus dem erzeugten Skalar unmittelbar die Konzentraten des betreffenden chemischen Elements oder Moleküls.

Fu Z et al. diskutieren in "Invariant Object Material Identification via Discriminant Learning on Absorption Features", Computer Vision and Pattern Recognition Workshop, 2006, einen Ansatz zur Identifizierung von Objektmaterial in der spektralen Bildgebung unter Kombination von Absorptionsmerkmalen und statistischem maschinellen Lernen.

US 2002/0146160 A1 betrifft ein Verfahren und eine Vorrichtung zur Erzeugung einer zweidimensionalen histologischen Karte aus einem dreidimensionalen Hyperspektraldatenwürfel.

Der Erfindung liegt somit die Aufgabe zugrunde, eine Inhaltsstoffanalyse einer Probe zu vereinfachen.

Diese Aufgabe wird durch die Gegenstände der unabhängigen Patentansprüche 1,10 gelöst. Vorteilhafte Ausführungsformen ergeben sich aus den abhängigen Patentansprüchen, der Beschreibung und den Figuren.

Ein Aspekt der Erfindung nach Anspruch 1 betrifft ein Verfahren zum Identifizieren eines oder mehrerer spektraler Merkmale Mᵢ in einem Spektrum Y einer Probe für eine Inhaltsstoffanalyse der Probe. Die Inhaltsstoffanalyse kann dabei im Sinne einer Materialklassifizierung verstanden werden. Je nach Messaufbau oder Spektrometer kann das Spektrum ein Transmissionsspektrum und/oder ein Reflexionsspektrum und/oder ein Emissionsspektrum sein oder umfassen. Das Verfahren umfasst dabei eine Reihe von Verfahrensschritten wie in Anspruch 1 definiert.

Ein erster Verfahrensschritt ist ein Bereitstellen des für die Probe gemessenen Spektrums Y an eine Recheneinheit. Das gemessene Spektrum Y repräsentiert hier eine gemessene Intensität I in Abhängigkeit einer Wellenlänge L. Ein weiterer Verfahrensschritt ist ein Vorgeben einer Approximationsfunktion X_{LS}, welche eine (n-1)-mal stetig differenzierbare mathematische Funktion ist, an die Recheneinheit. Die Approximationsfunktion X_{LS} approximiert dabei ein Absorptions- (und damit Transmissions-) und/oder Emissionsverhalten der Probe in Abhängigkeit der Wellenlänge L mit einer jeweiligen Breite, einer Absorptions- und/oder Emissionsbreite, welche im Folgenden einheitlich als Unschärfe S bezeichnet wird. Beispielsweise kann so die Absorption für eine vorgegebene Wellenlänge Lᵢ mit der Breite S durch eine Gauß-Funktion mit der Breite S approximiert werden, welche ihr Maximum an der Stelle Lᵢ erreicht. Um diese Abhängigkeit deutlich zu machen ist die Approximationsfunktion als Approximationsfunktion X_{LS} eingeführt, wird jedoch im Folgenden der Übersichtlichkeit halber auch als Approximationsfunktion X bezeichnet.

Ein weiterer Verfahrensschritt ist ein jeweiliges Bilden einer Ableitung (n-1)-ten Grades *dⁿ⁻¹*/Lⁿ⁻¹ des Spektrums Y, also einer Spektrums-Ableitung Y', und der Approximationsfunktion X, also einer Approximationsfunktions-Ableitung X', durch die Recheneinheit. Dabei ist die Zahl n > 1. Die Approximationsfunktion X sowie das Spektrum Y werden also jeweils gleich oft, nämlich n-1-mal nach der Wellenlänge L abgeleitet. Das hat den Effekt, dass multiplikative wellenlängen-abhängige Anteile bis zur (n-1)-ten Ordnung korrigiert werden. Hier liegt der Erfindung die Erkenntnis zugrunde, dass der Offset bzw. die sogenannte Baseline des Spektrums Y durch Streueffekte entsteht, es sich bei diesen also um einen multiplikativen Einfluss handelt, welcher durch eine glatte Funktion der Ordnung n beschrieben werden kann. Dies liegt in der Erkenntnis begründet, dass eine Signalstärke, welche die gemessene Intensität erfasst wird und von der Geometrie des genutzten Spektroskops abhängt, durch das Abstandsgesetzt proportional zu 1/d² ist, wobei d den Abstand zwischen Sensor und Probe bzw. Probe und Lichtquelle beschreibt. So können auch Einflüsse der Objektgröße, also beispielsweise einer Körnung oder eines Mahlgrads bzw. einer Oberflächenstruktur ebenfalls als multiplikative Faktoren proportional zu rⁿ bzw. Lⁿ dargestellt werden, wobei r ein Maß für die Objektgröße und L die Wellenlänge ist. Die Zahl n, welche den Grad der zu bildenden Ableitung bestimmt, kann man beispielsweise aus der Mie-Theorie ableiten, aus welcher sich ein Maximalwert von n=6 oder n=12 ergeben kann. Grundsätzlich gilt hier, dass mit höheren Ableitungen auch ein Rauschanteil verstärkt wird, weshalb man wie weiter unten auch noch ausführlicher beschrieben im Allgemeinen möglichst geringe Werte für n wählt. Als besonders vorteilhaft hat sich hier in der Praxis die Wahl von n < 5, bevorzugt n = 2 oder 3 als geeignet herausgestellt.

Ein weiterer Verfahrensschritt ist ein Erzeugen einer Korrelationsmatrix aus den beiden Ableitungen (n-1)-ten Grads X', Y' für vorgegebene Wellenlängen L und vorgegebene Unschärfen S durch die Recheneinheit. Durch das Erzeugen der Korrelationsmatrix wird der hochdimensionale Musterraum aus dem Stand der Technik durch einen zweidimensionalen Merkmalsraum ersetzt. Die Korrelationsmatrix repräsentiert somit eine Merkmalslandkarte, in welcher ein oder mehrere spektrale Merkmale Mᵢ(Lᵢ, Sᵢ) an den durch jeweilige Wellenlänge Lᵢ und Unschärfe Sᵢ bestimmten Orten Inhaltsstoffe der Probe bestimmen, wie im Folgenden noch erläutert wird. Die Korrelationsmatrix beschreibt somit eine Korrelation zwischen der Ableitung X' der Approximationsfunktion X und der Ableitung Y' des Spektrums Y, in Abhängigkeit von Wellenlänge(n) L und Unschärfe(n) S. Da die Matrix auch dünn besetzt sein kann, also beispielsweise zu einem Großteil aus Nullen bestehen kann, kann eine solche Matrix auch durch eine Menge aus Dreituppeln (Lᵢ, Sᵢ, X'^{∗}Y') bestehen, wobei X'^{∗}Y' der Wert der Korrelationsmatrix an der Stelle (Lᵢ, Sᵢ) sein kann. Beispielsweise kann der Wert der Korrelationsmatrix durch eine WaveletTransformation oder das Skalarprodukt < X'|Y' > bestimmt sein. Entsprechend umfasst der Matrixbegriff vorliegend im Rahmen dieser Schrift nicht nur eine klassische nxm-Matrix, sondern auch eine Menge aus Dreituppeln, welche geeignet ist, eine solche Matrix unter der Annahme zu beschreiben, dass diese größtenteils aus Nullen besteht.

Ein weiterer Verfahrensschritt ist nun ein jeweiliges Identifizieren des spektralen Merkmals Mᵢ oder eines der spektralen Merkmale Mᵢ in Abhängigkeit jeweils eines lokalen Extremums i der Korrelationsmatrix für zumindest ein Extremum i der Korrelationsmatrix, bevorzugt mehrere oder alle Extrema i der Korrelationsmatrix. Zumindest einem, bevorzugt aber mehreren oder aber allen Extrema i der Korrelationsmatrix wird somit (genau) ein spektrales Merkmal Mᵢ zugeordnet. Die Merkmale Mᵢ sind somit spezifische Punkte oder Landmarken in dem zweidimensionalen Raum für Merkmale, welcher durch die Wellenlänge L und die Unschärfe S aufgespannt wird. Das Merkmal Mᵢ bzw. die Menge der Merkmale Mᵢ repräsentiert somit die spektrale Signatur zur Materialklassifizierung. Wie weiter unten noch ausgeführt, lässt sich mittels der genannten Merkmale Mᵢ auch noch eine quantitative Inhaltsstoffbestimmung durchführen. Das beschriebene Verfahren liefert somit eine robuste Identifizierung von Merkmalen in spektralen Daten, welche invariant bzgl. physikalischer Eigenschaften der Probe, Sensoreigenschaften der genutzten spektralen Sensoren und einer Geometrie des genutzten Spektrokops sind.

Die beschriebene Vorgehensweise bringt so eine ganze Reihe von Vorteilen mit sich. Zunächst können die spektralen Merkmale Mᵢ und damit auch die spektralen Daten einfach visuell interpretierbar dargestellt werden. Damit können auch Prognosen für die zur Analyse benötigten spektralen Bereiche und Auflösungen getroffen werden, beispielsweise kann so ein einfacherer, robusterer Sensor in einer Fertigungsstraße zum Einsatz kommen, wenn nur wenige Merkmale Mᵢ in einem vorgegebenen spektralen Bereich zur für die Inhaltsstoffanalyse der Probe ausreichen. Der beschriebene Merkmalsraum ist überdies universell einsetzbar, ein gerätespezifisches Transferprotokoll zum Vergleichbarmachen von Daten eines Gerätes mit Daten eines anderen Gerätes wird somit nicht benötigt. Es ist somit möglich, lokale Muster im Merkmalsraum für die Klassifikation zu identifizieren und in unterschiedlichen Geräten oder Sensoren zu verwenden. Wird so beispielsweise ein anderer Sensor mit einem anderen Aufnahmebereich genutzt, genügt es, den jeweils passenden Ausschnitt der Korrelationsmatrix zu berechnen.

Da die jeweilige Position Lᵢ und Unschärfe S eines Merkmals Mᵢ physikalische Größen der Probe repräsentiert und damit invariant gegenüber dem verwendeten Messgerät sind, und auch die Signalstärke, d.h. eine Geometrie des Spektrokops diese Größen nicht beeinflusst, liefert das beschriebene Verfahren eine vereinheitlichende Vorverarbeitung der Messdaten, welche aufgrund ihrer Interpretierbarkeit beispielsweise vorteilhaft bei maschinellen Lernverfahren genutzt werden können. Somit können chemometrische Modelle basierend auf den beschriebenen Merkmalen Mᵢ im Umfeld mobiler Sensoren und im hyperspektralen Imaging zur Klassifikation oder zur Regression eingesetzt werden.

Die in dem Verfahren realisierte Dimensionsreduzierung verringert die Zahl der benötigten Proben zur Erstellung eines Modells für unterschiedliche Inhaltsstoffe. Auch sind die spektrokopischen Daten gerade im Bereich des ultravioletten, sichtbaren und Infrarotspektrums stark korreliert, so dass die Korrelationsmatrix besonders aussagekräftig ist. Des Weiteren hat das vorgeschlagene Verfahren den Vorteil, dass lokale Maxima der Korrelationsmatrix Absorptionsmerkmale zeigen, welche näherungsweise über das Lamber'sche Gesetz mit der quantitativen Menge der jeweiligen Inhaltsstoffe verknüpft sind und so auch eine quantitative Analyse der Inhaltsstoffe ermöglichen, wie weiter unten noch ausgeführt.

Der beschriebene Aspekt betrifft also ein Verfahren zum Identifizieren eines oder mehrerer spektraler Merkmale in einem Spektrum einer Probe für eine Inhaltsstoffanalyse der Probe.

Das Verfahren eignet sich somit insgesamt hervorragend zur Analyse spektrokopischer Daten. Es können vergleichbare Datensätze zur Analyse mit unterschiedlichen Messgeräten erstellt werden. Da das Verfahren chemische Merkmale unabhängig von äußeren Einflüssen extrahiert, eignet es sich besonders gut für Analysen der Reflektanz und Transmission, bevorzugt im ultravioletten, visuellen, und/oder Infrarotspektrum, mit mobilen Spekrometern, beispielsweise sogenannten Low-Cost-Spektrometern, und im hyperspektralen Imaging. Beispielhafte Anwendungsbereiche sind Food-Scanner im Lebensmittelbereich, Bodenanalysen im Landwirtschaftsektor, Sortieranlagen für Schüttgüter und Blutzuckeranalysen im medizinischen Bereich. Überdies ist das Verfahren geeignet, eine spektrale Datenbank visuell interpretierbar zu strukturieren und so beispielsweise einen Standard zur Speicherung spektraler Daten zu definieren.

In einer vorteilhaften Ausführungsform ist dabei vorgesehen, dass das Erzeugen der Korrelationsmatrix ein Berechnen eines Skalarprodukts < X'|Y' > der beiden Ableitungen (n-1)-ten Grads X' und Y' und/oder ein Durchführen einer Wavelet-Transformation der Ableitung (n-1)-ten Grads Y' des Spektrums Y mit der Ableitung (n-1)-ten Grads X' der Approximationsfunktion X als Wavelet umfasst oder ist. Die Wavelet-Transformation kann eine diskrete oder kontinuierliche Wavelet-Transformation umfassen oder sein. Das Skalarprodukt kann dabei das Standard-Skalarprodukt bzw. euklidische Skalarprodukt umfassen oder sein. Der Wert der Korrelationsmatrix an der Stelle Lᵢ, Sᵢ wird in diesem Fall durch das Skalarprodukt < X'_{Li,Si}|Y' > berechnet und kann sich dann mit geringem Rechenaufwand durch eine einzige Vektor-Multiplikation und anschließende N-fache Addition ergeben. Dabei werden die N Einträge des Vektors Y' durch die Ableitung des (als Vektor vorliegenden) Spektrum Y in Vektorform gebildet. Dabei sind die Intensitäten der N Messpunkte des Spektrums Y die Einträge des als Vektor vorliegenden Spektrums Y. Die in Form eines Vektors vorliegende Ableitung X' kann durch ein entsprechendes Abtasten oder Samplen der analytischen Ableitung X' der Approximationsfunktion X an N Stellen erzeugt werden. Da vorteilhafterweise die Approximationsfunktion X bei gegebenem Sᵢ für alle Lᵢ die gleiche Form hat, beispielsweise eine Gaussfunktion mit Maximum bei dem jeweiligen Lᵢ, und für unterschiedliche Lᵢ nur entlang der Wellenlänge L verschoben ist, wird so durch das Skalarprodukt ein Wert geliefert, welcher mit dem Vorhandensein eines (hier gaussförmigen) Maximums (mit der Unschärfe Sᵢ) an der Stelle Lᵢ korreliert.

Das hat den Vorteil einer glättenden Wirkung, da zur Berechnung der Einträge der Korrelationsmatrix, welche auch als jeweilige Korrelationslänge, beispielsweise Korrelationslänge < X'_{Li,Si}|Y' >, eine große Zahl (<N) spektraler Daten verwendet wird, da für jeden einzelnen Eintrag das gesamte Spektrum Y oder zumindest mehr als ein Messwert y des Spektrums Y ausgewertet wird. Die Verwendung des Skalarproduktes für das Erzeugen der Korrelationsmatrix liefert so eine besonders robuste und Rechenkapazität sparende Darstellung der gewünschten Merkmale M_{I}. Die Verwendung von Wavelet-Transformationen bringt eine besonders große Flexibilität mit sich.

In einer weiteren vorteilhaften Ausführungsform ist vorgesehen, dass das Bilden der Ableitungen X' und Y' und/oder das Erzeugen der Korrelationsmatrix mehrfach für verschiedene Zahlen n durchgeführt wird. Insbesondere kann das Bilden der Ableitungen X' und Y' hintereinander für aufsteigende Zahlen n durchgeführt werden. Bevorzugt erfolgt dies solange, bis die Ableitung Y' des Spektrums Y und/oder die Ableitung X' der Approximationsfunktion X und/oder die Korrelationsmatrix ein vorgegebenes Qualitätskriterium nicht mehr erfüllt. Beispielsweise kann das Bilden der Ableitungen solange durchgeführt werden, bis ein Glättegrad der Ableitung Y' nicht mehr erfüllt ist und/oder ein vorgegebenes Signal-zu-Rauschverhältnis der Ableitung Y' nicht mehr erreicht wird. Das Identifizieren erfolgt dann in Abhängigkeit des lokalen Extremums i oder der lokalen Extrema i derjenigen Korrelationsmatrix, welche der höchsten Zahl n zugeordnet ist und für welche das Qualitätskriterium durch die Ableitung Y' des Spektrums Y und/oder die Ableitung X' der Approximationsfunktion X und/oder die Korrelationsmatrix noch erfüllt ist. Beispielsweise kann so das Identifizieren in Abhängigkeit der Korrelationsmatrix erfolgen, für welche die entsprechende Ableitung Y' des Spektrums Y noch ein vorgegebenes Signal-zu-Rauschverhältnis übertrifft.

Das hat den Vorteil, dass so stets der konkret im Spektrum vorliegende Offset sowie weitere konkret vorliegende multiplikative Einflüsse kompensiert werden können, ohne dass vorab die Zahl n festgelegt werden muss. Durch das Vorgeben jeweiliger Qualitätskriterien, welche beispielsweise gemäß in der Recheneinheit hinterlegter Vorschriften auch automatisch überprüft werden können, kann so auch auf vollautomatische Weise stets die bestmögliche Korrelationsmatrix und somit die zuverlässigsten Merkmale M_{I} berechnet werden.

In einer anderen bevorzugten Ausführungsform ist vorgesehen, dass die Approximationsfunktion Y derart vorgegeben ist, dass die Ableitung (n-1)-ten Grades Y' der Approximationsfunktion Y mittelwertfrei ist. Insbesondere kann die Approximationsfunktion als Gaussfunktion oder Lorentzfunktion mit einer vorgegebenen Unschärfe S vorgegeben sein. Unter mittelwertfrei kann hier zu verstehen sein, dass das Integral über die Ableitungen X' von minus Unendlich bis plus Unendlich Null ist.

Das hat den Vorteil, dass mit der mittelwertfreien Definition der abgeleiteten Approximationsfunktion und damit insbesondere auch der Wavelets das Verschwinden eines weiteren Momentes erreicht wird, so dass mit der (n-1)-ten Ableitung bereits die multiplikative Korrektur n-ter Ordnung des Spektrums realisiert wird. Damit wird beispielsweise auch ein verbessertes Signal zu Rauschverhältnis und als Folge eine genauere Identifikation der Merkmale erreicht.

In einer weiteren besonders vorteilhaften Ausführungsform ist vorgesehen, dass das lokale Extremum i und die lokalen Extrema i bei dem Identifizieren jeweils lokale Maxima umfassen oder sind. Alternativ können die beim Identifizieren genutzten Extrema auch lokale Maxima und lokale Minima umfassen, was eine Erhöhung der Anzahl der Merkmale und damit potentiell eine genauere Inhaltsstoffanalyse ermöglicht.

Die Wahl der Maxima, insbesondere die ausschließliche Wahl der Maxima bringt jedoch den Vorteil von sehr zuverlässigen Merkmalen und damit sehr genauer Inhaltsstoffanalyse mit relativ wenigen Merkmalen und folglich mit verringertem Rechenaufwand mit sich, da sich gezeigt hat, dass die Maxima (im Vergleich zu den Minima) zur Identifikation der Merkmale besonders geeignet sind.

In einer weiteren vorteilhaften Ausführungsform ist vorgesehen, dass bei dem Identifizieren in Abhängigkeit des lokalen Extremums i der Korrelationsmatrix das jeweilige Merkmal M_{I} durch Koordinaten (L_{I}, S_{I}) des Extremums i in einem durch die Korrelationsmatrix bestimmten Wellenlängen-Unschärfen-Raum, der auch als Karte bezeichnet werden kann, identifiziert wird oder ist. Insbesondere kann hier zumindest einem Merkmal M_{I}, bevorzugt allen Merkmalen M_{I}, ein Ausprägungsgrad X'^{∗}Y' zugeordnet sein, welcher durch den Wert des Extremums i bestimmt ist. Beispielsweise kann das Ausprägungsgrad durch die Korrelationslänge bzw. das oben genannte Skalarprodukt < X'_{Si,Li}|Y' > bestimmt sein.

Der Wellenlängen-Unschärfen-Raum hat sich als besonders geeignet für die gewünschten robusten Merkmale M_{I} herausgestellt. Da die Korrelationslänge, welche insbesondere durch das Skalarprodukt < X'|Y' > gegeben sein kann, näherungsweise über das Beer-Lambertsche Gesetz mit der quantitativen Menge der Inhaltsstoffe verknüpft ist, kann so über die Merkmale M_{I} nicht nur eine Inhaltsstoffanalyse im Sinne einer Materialklassifizierung, sondern auch im Sinne einer quantitativen Inhaltsstoffbestimmung realisiert werden.

In einer weiteren vorteilhaften Ausführungsform ist vorgesehen, dass das Spektrum ein unbearbeitetes gemessenes Spektrum, ein sog. Rohspektrum, ist oder umfasst. Alternativ kann das gemessene Spektrum auch ein geglättetes gemessenes Spektrum sein oder umfassen, welches aus einem unbearbeitetem Spektrum durch ein Glättungs- und/oder Filter- und/oder Skalierungsverfahren, und bevorzugt durch keine anderen oder weiteren Bearbeitungsschritte, erzeugt ist.

Gerade bei unbearbeiteten gemessenen Spektren hat sich die beschriebene Methode als besonders vorteilhaft erwiesen, da hier wichtige Informationen, welche bei den ansonsten im Stand der Technik üblichen oder bekannten Bearbeitungsschritten verlorengehen, erhalten bleiben und so die identifizierten Merkmale eine besonders genaue Inhaltsstoffanalyse ermöglichen.

In einer besonders vorteilhaften Ausführungsform ist vorgesehen, dass als weiterer Verfahrensschritt die im Spektrum für die Probe das identifizierte Merkmal oder die identifizierten Merkmale mit einem oder mehreren in der Recheneinheit hinterlegten Referenz-Merkmal(en) verglichen werden, und anhand eines Merkmals-Vergleichsergebnisses zumindest ein in der Probe vorhandener Inhaltsstoff identifiziert wird. Es kann somit anhand des Merkmals-Vergleichsergebnisses die Probe bzw. das Material oder die Materialien der Probe klassifiziert werden. Bevorzugt werden dabei für die identifizierten Merkmale auch die jeweiligen Ausprägungsgrade mit einem oder mehreren entsprechenden Referenz-Ausprägungsgraden verglichen und anhand eines Ausprägungsgrad-Vergleichsergebnisses eine Menge, bevorzugt eine relative Menge des Inhaltsstoffes in der Probe quantifiziert. Anhand des Ausprägungsgrad-Vergleichsergebnisses kann somit eine quantitative Inhaltsstoffbestimmung der Probe durchgeführt werden.

Das hat den Vorteil, dass die Probe auch quantitativ hinsichtlich ihrer Inhaltsstoffe entsprechend den oben für die anderen Ausführungsformen beschriebenen Vorteilen besonders genau analysiert werden kann.

In einer weiteren vorteilhaften Ausführungsform ist vorgesehen, dass die Zahl n > 2 ist. Für diese größeren Zahlen n hat sich herausgestellt, dass besonders gute Ergebnisse erzielt werden.

Ein weiterer Aspekt der Erfindung betrifft auch eine Vorrichtung zum Identifizieren eines oder mehrerer spektraler Merkmale M_{I} in einem Spektrum Y einer Probe für eine Inhaltsstoffanalyse der Probe, welche eine Recheneinheit aufweist, entsprechend Anspruch 10.

Die Recheneinheit ist dabei *inter alia* ausgebildet, von einem bereitgestellten Spektrum Y und einer vorgegebenen Approximationsfunktion X, welche ein stetig differenzierbare mathematische Funktion ist, jeweils eine Ableitung (n-1)-ten Grades Y', X' des Spektrums Y und der Approximationsfunktion X zu erzeugen, wobei die Zahl n > 1 ist. Ferner ist die Recheneinheit ausgebildet, aus den beiden Ableitungen (n-1)-ten Grades X', Y' eine Korrelationsmatrix zu erzeugen und für zumindest ein lokales Extremum i der Korrelationsmatrix in Abhängigkeit des jeweiligen lokalen Extremums i der Korrelationsmatrix jeweils das spektrale Merkmal Mᵢ oder eines der spektralen Merkmale Mᵢ zu identifizieren.

Vorteile und vorteilhafte Ausführungsformen der Vorrichtung entsprechen hier Vorteilen und vorteilhaften Ausführungsformen des beschriebenen Verfahrens.

Die vorstehend in der Beschreibung genannten Merkmale (oder Charakteristika) und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind, begrenzt nur durch die beigefügten Ansprüche. Hier sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über den in den Rückbezügen der Ansprüche dargelegten Merkmalskombinationen hinausgehen oder von diesen abweichen, begrenzt nur durch den Umfang der beigefügten Ansprüche.

Ausführungsbeispiele der Erfindung anhand schematischer Zeichnungen näher erläutert. Dabei zeigen:
- Fig.1: eine Darstellung zweier beispielhafter Spektren chemisch identischer Stoffe;
- Fig. 2: eine beispielhafte Approximationsfunktion;
- Fig. 3: eine Darstellung beispielhafter Ableitungen der Spektren aus Fig. 1;
- Fig. 4: eine den in Fig. 3 dargestellten Ableitungen entsprechende Ableitung der Approximationsfunktion von Fig. 2;
- Fig. 5: eine beispielhafte aus den in Fig. 3 und Fig. 4 gezeigten Ableitungen vorliegend mit einem Berechnen eines Skalarproduktes erzeugte Korrelationsmatrix mit den identifizierten spektralen Merkmalen; und
- Fig. 6: eine vergleichende Darstellung von für die beiden Spektren aus Fig. 1 identifizierten Merkmalen.

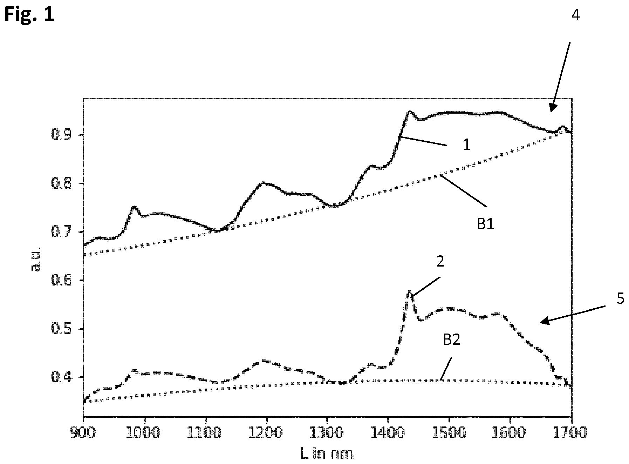

In Fig. 1 ist mit einer ersten Kurve 1 ein Spektrum 4, vorliegend ein Reflektionsspektrum von Zucker als Intensität in willkürlichen Einheiten [a.u.] über der Wellenlänge L in nanometern aufgetragen. Eine weitere Kurve 2 stellt hier analog ein zweites Spektrum 5, hier ein Reflektionsspektrum von Puderzucker als Funktion der Wellenlänge dar. Die beiden Kurven 1, 2 sind hier deutlich voneinander abgesetzt, so nimmt die erste Kurve in dem Wellenbereich von 900 bis 1700 nm Reflektionswerte zwischen rund 0,65 und 0,95 ein, wohingegen die zweite Kurve 2 lediglich Reflektionswerte zwischen rund 0,35 und 0,55 erreicht. Entsprechend sind beide Kurven 1, 2 schwer zu vergleichen.

Zusätzlich zu den beiden Kurven 1, 2 sind auch zwei Offsetkurven B1, B2, welche jeweils zur Kurve 1 bzw. 2 zugehörig sind, eingezeichnet. Beide Offsetkurven B1, B2 repräsentieren einen multiplikativen Einfluss auf die dargestellten Spektren 4, 5, vorliegend die Reflektivität der entsprechenden Proben, und können durch eine glatte Funktion der jeweiligen Ordnung n beschrieben werden, beispielsweise durch ein Polynom. Dabei nimmt die Kurve 1 und damit dem Zucker zugeordnete Offsetkurve oder Baseline B1 vorliegend Werte zwischen 0,65 und 0,9 für ihre Reflektivität ein und die zweite Offsetkurve B2, welche Kurve 2 und damit dem Puderzucker zugeordnet ist, Werte zwischen ca. 0,35 und 0,38.

Das Spektrum 4 des Zuckers als auch das Spektrum 5 des Puderzuckers kann nun jeweils in einem ersten Verfahrensschritt an eine Recheneinheit bereitgestellt werden.

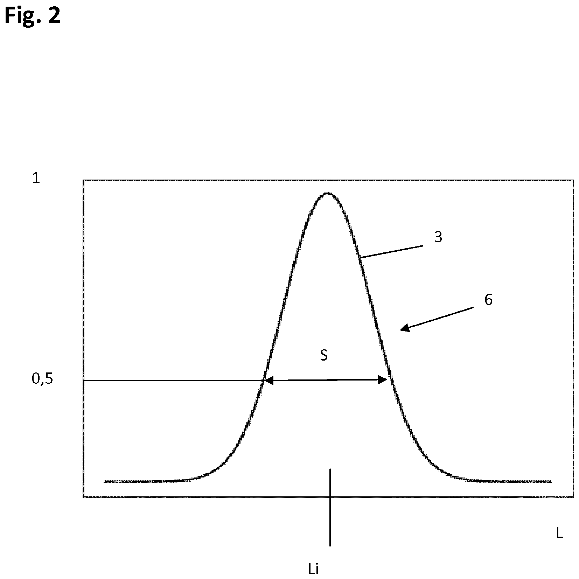

In Fig. 2 ist eine Approximationsfunktion 6, welche als stetig differenzierbare mathematische Funktion vorgegeben ist, als Kurve 3 eingezeichnet. Die Kurve 3 ist dabei über der Wellenlänge L als Intensität in willkürlichen Einheiten aufgetragen. Vorliegend ist die Approximationsfunktion 6 eine Gaussfunktion, welche um die Wellenlänge Lᵢ (oder gleichwertig Li) zentriert ist und eine vorgegebene Unschärfe S, welche im vorliegenden Fall die Halbwertsbreite (Fullwidth-half-maximum) der Kurve 3 um die Wellenlänge Lᵢ angibt, vorgegeben.

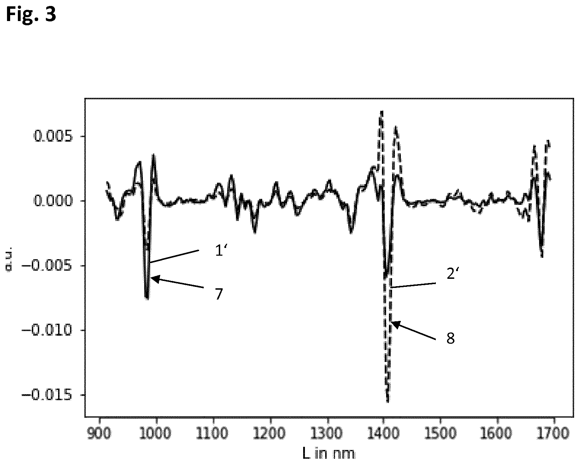

In Fig. 3 sind nun zwei weitere Kurven 1', 2' über der Wellenlänge L von 900 bis 1700 nm eingezeichnet. Bei beiden Kurven 1', 2' handelt es sich um Ableitungen (n-1)-ten Grades 7, 8 der in Fig. 1 gezeigten Kurven 1, 2. Diese sind jeweils in willkürlichen Einheiten [a.u.] aufgetragen. Da im vorliegenden Fall n = 3 gewählt ist, stellt die erste Kurve 1' somit die zweite Ableitung 7 der Kurve 1 aus Fig. 1 nach der Wellenlänge L dar und die zweite Kurve 2' die zweite Ableitung 8 der Kurve 2 aus Fig. 1. Damit wird vorliegend der multiplikative Anteil in der Ordnung bis zur n-ten Ordnung, als vorliegend der zweiten Ordnung, korrigiert. Entsprechend liegen die beiden Kurven 1', 2' nun fast übereinander, die Offsetkurzen B1, B2 aus Fig. 1 sind entsprechend nicht mehr eingezeichnet.

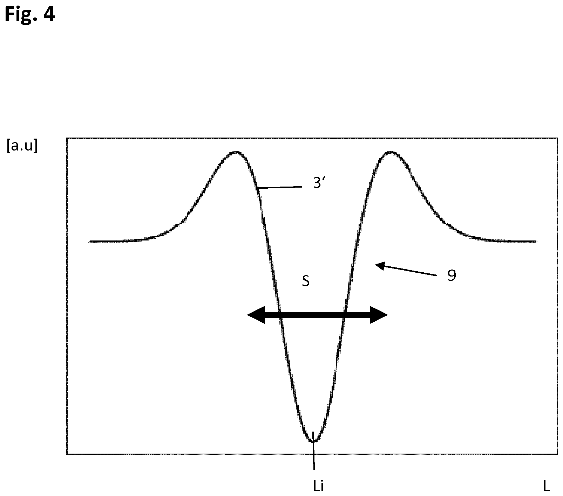

Die ausgehend von der Approximationsfunktion 6 gebildete Ableitung 2. Grades 9 ist durch Kurve 3' in Fig. 4 dargestellt. Diese ist vorliegend ebenfalls in willkürlichen Einheiten (a. u.) über der Wellenlänge L aufgetragen. Ausgehend von hier der als Approximationsfunktion 6 gewählten Gaussfunktion ergibt sich vorliegend ein umgedrehtes sog. Mexican-Hat-Profil.

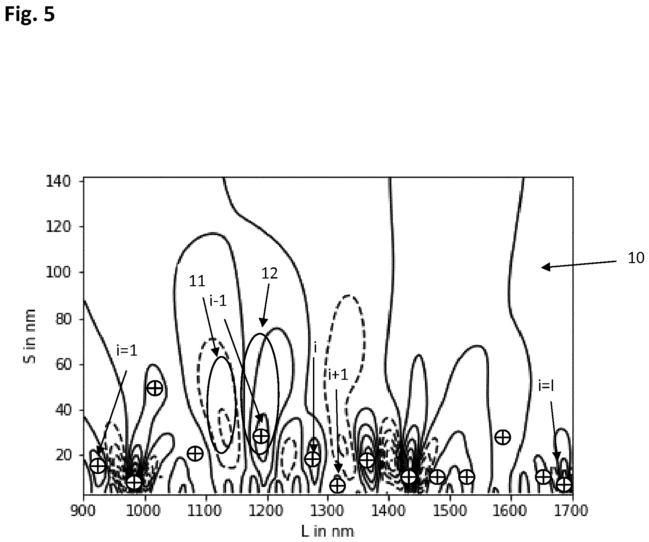

In Fig. 5 ist nun eine Korrelationsmatrix 10 dargestellt, welche aus den beiden Ableitungen 7, 9 erzeugt wurde, indem ein Skalarprodukt der beiden Ableitungen 7, 9 berechnet wurde. Dieses Skalarprodukt wurde hier für sämtliche zuvor definierten Wellenlängen L und Unschärfen S durchgeführt, vorliegend also für die Wellenlängen von 900 bis 1700 nm und die Unschärfe von 0 bis 140 nm. Die Werte der Korrelationsmatrix 10 an den Koordinaten (Lᵢ, Sᵢ) entsprechen somit jeweils dem berechneten Skalarprodukt und können auch als Korrelationslänge bezeichnet werden.

Für zumindest ein, bevorzugt mehrere oder aber alle Extrema i der Korrelationsmatrix 10, bevorzugt alle Maxima der Korrelationsmatrix 10 wird nun eines bzw. mehrere spektrale Merkmale Mᵢ dentifiziert. Vorliegend sind hier die Extrema i als Maxima gewählt, so dass die Merkmale vorliegend im zweidimensionalen Merkmalsraum 1 Mᵢ = (Lᵢ; Sᵢ) mit i = 1,..I gegeben sind. Diese Merkmale Mᵢ beinhalten die spektrale Signatur zur Inhaltsstoffanalyse der Probe, d. h. zur Materialklassifizierung. Zum besseren Verständnis ist hier beispielhaft jeweils ein Bereich 11 um ein lokales Minimum und ein weiterer Bereich 12 um ein lokales Maximum, das Extremum i-1, eingezeichnet.

Im gezeigten Beispiel sind die jeweiligen Maxima als Extrema i für Zucker und eingezeichnet. Beispielsweise kann über einen Vergleich der Merkmale Mᵢ des Zucker-Spektrums 4 mit hinterlegten Referenzmerkmalen die chemische Identität zum ersten Spektrum 4 gehörigen nachgewiesen werden. Hierfür können beispielsweise auch jeweilige Toleranzwerte vorgegeben werden, welche eine maximale Abweichung von den identifizierten Merkmalen Mᵢ mit den hinterlegten Referenzmerkmalen vorgeben. Ist auch eine quantitative Inhaltsstoffbestimmung vorgesehen, so können die Merkmale Mᵢ mit Mᵢ = (Lᵢ, Sᵢ, X'^{∗}Y') vorgegeben werden, wobei X'^{∗}Y' das Skalarprodukt der Ableitung 7 des Spektrums 4 und der Ableitung 9 der Approximationsfunktion 3 ist, und i = 1,.. I. Ein größeres Skalarprodukt X'^{∗}Y' bzw. eine größere Korrelationslänge an einem bestimmten Extremum i weist hier aufgrund des Beer-Lambertschen Gesetzes eine größere Menge des Inhaltsstoffes in der Probe hin, ein kleineres Skalarprodukt X'^{∗}Y' bzw. eine kleinere Korrelationslänge auf eine geringere Menge.

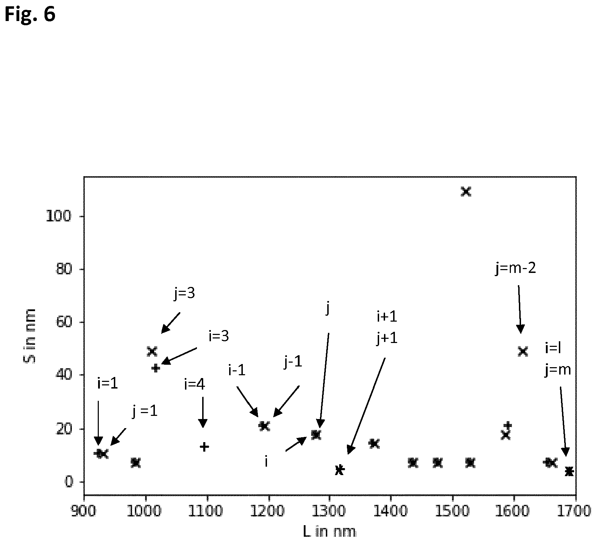

In Fig. 6 sind die als Maxima gewählten Extrema i aus Fig. 5 sowie zusätzlich die als Maxima gewählten Extrema j, welche analog zu den Extrema i aus dem Puderzucker-Spektrum 5 abgeleitet wurden, in einem Wellenlängen-Unschärfe-Raum (L-S-Raum) dargestellt. Da eine Vielzahl der Extrema i, j übereinander liegen (beispielsweise für (i; j)=(2;2), (i-1;j-1), (i+1;j+1),.. (I;m)) oder in einer vorgegebenen Umgebung voneinander liegen (beispielsweise für (i; j)=(1;1), (i;j), (I-1;m-1)) kann über einen Vergleich der Merkmale Mᵢ des ersten (Zucker-)Spektrums 4 mit den Merkmalen Mⱼ des zweiten (Puderzucker-) Spektrums 5 als Referenzmerkmale die chemische Identität der beiden Proben nachgewiesen werden. Zur Definition der vorgegebenen Umgebung können beispielsweise auch jeweilige Toleranzwerte vorgegeben werden, welche eine maximale Abweichung von den Merkmalen Mᵢ mit den Merkmalen Mⱼ bestimmen.

## Patentansprüche

1. Verfahren zum Identifizieren eines oder mehrerer spektraler Merkmale in einem Spektrum (4, 5) einer Probe für eine Inhaltsstoffanalyse der Probe, mit den Verfahrensschritten:
a) Bereitstellen des Spektrums (4, 5);
b) Vorgeben einer Approximationsfunktion (6), welche eine stetig differenzierbare mathematische Funktion ist und ein Emissionsverhalten der Probe in Abhängigkeit der Wellenlänge L mit einer Unschärfe S approximiert;
**gekennzeichnet durch**
c) jeweiliges Bilden einer Ableitung (n-1)-ten Grades (7, 8, 9) des Spektrums (4, 5) und der Approximationsfunktion (6), wobei die Zahl n>1 ist;
d) Erzeugen einer Korrelationsmatrix (10) aus den beiden Ableitungen (n-1)-ten Grades (7, 8, 9) für vorgegebene Wellenlängen L und vorgegebene Unschärfen S, wobei die Korrelationsmatrix (10) eine Korrelation zwischen der Ableitung der Approximationsfunktion und der Ableitung des Spektrums in Abhängigkeit von Wellenlänge L und Unschärfe S beschreibt;
e) jeweiliges Identifizieren des spektralen Merkmals oder eines der spektralen Merkmale in Abhängigkeit jeweils eines lokalen Extremums (i) der Korrelationsmatrix (10) für zumindest ein Extremum (i) der Korrelationsmatrix (10), wobei das jeweilige Merkmal durch Koordinaten des Extremums (i) in einem durch die Korrelationsmatrix (10) bestimmten Wellenlängen-Unschärfen-Raum identifiziert wird.

2. Verfahren nach Anspruch 1, bei dem das Erzeugen der Korrelationsmatrix (10) ein Berechnen eines Skalarproduktes der beiden Ableitungen (n-1)-ten Grades (7, 8, 9) und/oder ein Durchführen einer Wavelettransformation der Ableitung (n-1)-ten Grades (7, 8) des Spektrums (4, 5) mit der Ableitung (n-1)-ten Grades (9)der Approximationsfunktion (6) als Wavelet umfasst.

3. Verfahren nach einem der vorhergehenden Ansprüche, bei dem das Bilden der Ableitungen (7, 8, 9) gemäß Verfahrensschritt c) und/oder das Erzeugen der Korrelationsmatrix (10) gemäß Verfahrensschritt d) mehrfach für verschiedene Zahlen n durchgeführt wird, insbesondere hintereinander für aufsteigende Zahlen n, bevorzugt so lange bis die Ableitung (7, 8) des Spektrums (4, 5) und/oder die Ableitung (9) der Approximationsfunktion (6) und/oder die Korrelationsmatrix (10) ein vorgegebenes Qualitätskriterium nicht mehr erfüllen, und das Identifizieren gemäß Verfahrensschritt e) in Abhängigkeit des lokalen Extremums (i) oder der lokalen Extrema (i) derjenigen Korrelationsmatrix (10) erfolgt, welche der höchsten Zahl n zugeordnet ist für welche das Qualitätskriterium durch die Ableitung (7, 8) des Spektrums (4, 5) und/oder die Ableitung (9) der Approximationsfunktion (6) und/oder die Korrelationsmatrix (10) noch erfüllt ist.

4. Verfahren nach einem der vorhergehenden Ansprüche, bei dem die Approximationsfunktion (6) derart vorgegeben ist, dass die Ableitung (n-1)-ten Grades (9) der Approximationsfunktion (6) mittelwertfrei ist, insbesondere die Approximationsfunktion (6) als Gaussfunktion oder Lorentzfunktion vorgegeben ist.

5. Verfahren nach einem der vorhergehenden Ansprüche, bei dem das lokale Extremum (i) oder die lokalen Extrema (i) bei dem Identifizieren gemäß Verfahrensschritt e) jeweils lokale Maxima umfassen.

6. Verfahren nach einem der vorhergehenden Ansprüche, wobei bei dem Identifizieren in Abhängigkeit des lokalen Extremums (i) der Korrelationsmatrix (10) gemäß Verfahrensschritt e) zumindest einem Merkmal ein Ausprägungsgrad zugeordnet wird, welcher durch den Wert des Extremums (i) bestimmt ist.

7. Verfahren nach einem der vorhergehenden Ansprüche, bei dem das Spektrum (4, 5) ein unbearbeitetes gemessenes Spektrum (4, 5) ist oder umfasst.

8. Verfahren nach einem der vorhergehenden Ansprüche, bei dem als weiterer Verfahrensschritt das oder die im Spektrum (4, 5) für die Probe identifizierten Merkmale mit einem oder mehreren in der Recheneinheit hinterlegten Referenz-Merkmalen verglichen werden, und anhand eines Merkmals-Vergleichsergebnisses zumindest ein in der Probe vorhandener Inhaltsstoff identifiziert wird, wobei bevorzugt für die identifizierten Merkmale auch die jeweiligen Ausprägungsgrade mit entsprechenden Referenz-Ausprägungsgraden verglichen werden und anhand eines Ausprägungsgrad-Vergleichsergebnisses eine Menge des Inhaltsstoffes in der Probe quantifiziert wird.

9. Verfahren nach einem der vorhergehenden Ansprüche, bei dem die Zahl n>2 ist.

10. Vorrichtung zum Identifizieren eines oder mehrerer spektraler Merkmale in einem Spektrum (4, 5) einer Probe für eine Inhaltsstoffanalyse der Probe, mit einer Recheneinheit, **dadurch gekennzeichnet, dass** die Recheneinheit ausgebildet ist, von einem bereitgestellten Spektrums (4, 5) und einer vorgegebenen Approximationsfunktion (6), welche eine stetig differenzierbare mathematische Funktion ist und ein Emissionsverhalten der Probe in Abhängigkeit der Wellenlänge L mit einer Unschärfe S approximiert, jeweils eine Ableitung (n-1)-ten Grades (7, 8, 9) des Spektrums (4, 5) und der Approximationsfunktion (6) zu erzeugen, wobei die Zahl n>1 ist; und die Recheneinheit ferner ausgebildet ist, aus den beiden Ableitungen (n-1)-ten Grades (7, 8, 9) eine Korrelationsmatrix (10) für vorgegebene Wellenlängen L und vorgegebene Unschärfen S zu erzeugen, wobei die Korrelationsmatrix (10) eine Korrelation zwischen der Ableitung der Approximationsfunktion und der Ableitung des Spektrums in Abhängigkeit von Wellenlänge L und Unschärfe S beschreibt
, und ferner ausgebildet ist,
für zumindest ein lokales Extremum (i) der Korrelationsmatrix (10) in Abhängigkeit des jeweiligen lokalen Extremums (i) der Korrelationsmatrix (10) jeweils das spektrale Merkmal oder eines der spektralen Merkmale zu identifizieren, wobei das jeweilige Merkmal durch Koordinaten des Extremums (i) in einem durch die Korrelationsmatrix (10) bestimmten Wellenlängen-Unschärfen-Raum identifiziert wird.

## Claims

1. A method for identifying one or more spectral features in a spectrum (4, 5) of a sample for a constituent analysis of the sample, comprising the method steps:
a) providing the spectrum (4, 5);
b) specifying an approximation function (6), which is a continuously differentiable mathematical function and approximates an emission behavior of the sample as a function of the wavelength L with an uncertainty S;
**characterized by**
c) respectively forming a derivative of (n-1)-th degree (7, 8, 9) of the spectrum (4, 5) and the approximation function (6), with the number n> 1;
d) generating a correlation matrix (10) from the two derivatives of (n-1)-th degree (7, 8, 9) for predetermined wavelengths L and predetermined uncertainties S, wherein the correlation matrix (10) describes a correlation between the derivative of the approximation function and the derivative of the spectrum as a function of wavelength L and uncertainty S;
e) respectively identifying the spectral feature or one of the spectral features in dependence upoon in each case one local extremum (i) of the correlation matrix (10) for at least one extremum (i) of the correlation matrix (10), the respective feature being identified by coordinates of the extremum (i) in a wavelength-uncertainty space determined by the correlation matrix (10).

2. The method of claim 1, wherein generating the correlation matrix (10) comprises calculating a scalar product of the two derivatives of (n-1)th degree (7, 8, 9) and/or performing a wavelet transform of the derivative of (n-1)th degree (7, 8) of the spectrum (4, 5) with the derivative of (n-1)th degree (9) of the approximation function (6) as wavelet.

3. The method according to one of the preceding claims, in which the formation of the derivatives (7, 8, 9) according to method step c) and/or the generation of the correlation matrix (10) according to method step d) is carried out several times for different numbers n, in particular successively for ascending numbers n, preferably until the derivative (7, 8) of the spectrum (4, 5) and/or the derivative (9) of the approximation function (6) and/or the correlation matrix (10) no longer satisfy a predetermined quality criterion, and the identification according to method step e) is carried out as a function of the local extremum (i) or the local extrema (i) of that correlation matrix (10) which is assigned to the highest number n for which the quality criterion is still fulfilled by the derivative (7, 8) of the spectrum (4, 5) and/or the derivative (9) of the approximation function (6) and/or the correlation matrix (10).

4. The method according to one of the preceding claims, in which the approximation function (6) is predetermined in such a way that the derivative of (n-1)-th degree (9) of the approximation function (6) is zero-mean, in particular the approximation function (6) is predetermined as a Gaussian function or Lorentz function.

5. The method according to any one of the preceding claims, wherein the local extremum (i) or the local extrema (i) each comprise local maxima when identified according to method step e).

6. The method according to any one of the preceding claims, wherein, during the identification as a function of the local extremum (i) of the correlation matrix (10) according to method step e), to at least one feature a degree of expression is assigned which is determined by the value of the extremum (i).

7. The method of any one of the preceding claims, wherein the spectrum (4, 5) is or comprises an unprocessed measured spectrum (4, 5).

8. The method according to one of the preceding claims, in which, as a further method step, the feature or features identified in the spectrum (4, 5) for the sample are compared with one or more reference features stored in the computing unit, and at least one constituent present in the sample is identified on the basis of a feature comparison result, preferably the respective degrees of expression for the identified features also being compared with corresponding reference degrees of expression, and an amount of the constituent in the sample being quantified on the basis of a degree-of-expression comparison result.

9. The method of any one of the preceding claims, wherein the number n>is 2.

10. A device for identifying one or more spectral features in a spectrum (4, 5) of a sample for a constituent analysis of the sample, comprising a computing unit,
**characterized in that**
the computing unit is designed to generate, in each case, a derivative of (n-1)-th degree (7, 8, 9) of the spectrum (4, 5) and of the approximation function (6) from a provided spectrum (4, 5) and a predetermined approximation function (6), which is a continuously differentiable mathematical function and approximates an emission behavior of the sample as a function of the wavelength L with an uncertainty S, with the number n> 1;
and the computing unit is further designed to generate a correlation matrix (10) from the two derivatives (n-1)-th of degree (7, 8, 9) for predetermined wavelengths L and predetermined uncertainties S, the correlation matrix (10) describing a correlation between the derivative of the approximation function and the derivative of the spectrum as a function of wavelength L and uncertainty S and being further designed to identify the spectral feature or one of the spectral features for at least one local extremum (i) of the correlation matrix (10) as a function of the respective local extremum (i) of the correlation matrix (10), the respective feature being identified by coordinates of the extremum (i) in a wavelength-uncertainty space determined by the correlation matrix (10).

## Revendications

1. Procédé d'identification d'une ou plusieurs caractéristiques spectrales dans un spectre (4, 5) d'un échantillon pour une analyse des constituants de l'échantillon, avec les étapes de procédé :
a) la mise à disposition du spectre (4, 5) ;
b) la définition d'une fonction d'approximation (6), laquelle est une fonction mathématique différentiable de manière continue et approxime un comportement d'émission de l'échantillon en fonction de la longueur d'onde L avec un flou S ;
**caractérisé par**
c) la formation respective d'une dérivée de (n-1)-ième degré (7, 8, 9) du spectre (4, 5) et de la fonction d'approximation (6), dans lequel le nombre est n>1;
d) la génération d'une matrice de corrélation (10) à partir des deux dérivées de (n-1)-ième degré (7, 8, 9) pour des longueurs d'onde L prédéfinies et des flous S prédéfinis, dans lequel la matrice de corrélation (10) décrit une corrélation entre la dérivée de la fonction d'approximation et la dérivée du spectre en fonction de la longueur d'onde L et du flou S ;
e) l'identification respective de la caractéristique spectrale ou d'une des caractéristiques spectrales en fonction respectivement d'un extremum (i) local de la matrice de corrélation (10) pour au moins un extremum (i) de la matrice de corrélation (10), dans lequel la caractéristique respective est identifiée par les coordonnées de l'extremum (i) dans un espace de flou de longueur d'onde déterminé par la matrice de corrélation (10).

2. Procédé selon la revendication 1, selon lequel la génération de la matrice de corrélation (10) comprend un calcul d'un produit scalaire des deux dérivées de (n-1)-ième degré (7, 8, 9) et/ou une mise en œuvre d'une transformée en ondelettes de la dérivée de (n-1)-ième degré (7, 8) du spectre (4, 5) avec la dérivée de (n-1)-ième degré (9) de la fonction d'approximation (6) sous forme d'ondelettes.

3. Procédé selon l'une quelconque des revendications précédentes, selon lequel la formation des dérivées (7, 8, 9) selon l'étape de procédé c) et/ou la génération de la matrice de corrélation (10) selon l'étape de procédé d) est mise en œuvre plusieurs fois pour différents nombres n, en particulier successivement pour des nombres n croissants, de préférence jusqu'à ce que la dérivée (7, 8) du spectre (4, 5) et/ou la dérivée (9) de la fonction d'approximation (6) et/ou la matrice de corrélation (10) ne remplissent plus un critère de qualité prédéfini, et l'identification selon l'étape de procédé e) s'effectue en fonction de l'extremum (i) local ou des extremums (i) locaux de la matrice de corrélation (10) qui est associée au nombre n le plus élevé pour lequel le critère de qualité est encore rempli par la dérivée (7, 8) du spectre (4, 5) et/ou la dérivée (9) de la fonction d'approximation (6) et/ou la matrice de corrélation (10).

4. Procédé selon l'une quelconque des revendications précédentes, selon lequel la fonction d'approximation (6) est prédéfinie de telle sorte que la dérivée de (n-1)-ième degré (9) de la fonction d'approximation (6) est exempte de valeur moyenne, en particulier la fonction d'approximation (6) est prédéfinie comme fonction de Gauss ou fonction de Lorentz.

5. Procédé selon l'une quelconque des revendications précédentes, selon lequel l'extremum (i) local ou les extremums (i) locaux comprennent chacun des maxima locaux lors de l'identification selon l'étape de procédé e).

6. Procédé selon l'une quelconque des revendications précédentes, dans lequel, lors de l'identification en fonction de l'extremum (i) local de la matrice de corrélation (10) selon l'étape de procédé e), un degré d'expression, lequel est déterminé par la valeur de l'extremum (i), est associé à au moins une caractéristique.

7. Procédé selon l'une quelconque des revendications précédentes, selon lequel le spectre (4, 5) est ou comprend un spectre (4, 5) mesuré non traité.

8. Procédé selon l'une quelconque des revendications précédentes, selon lequel, en tant qu'étape de procédé supplémentaire, la ou les caractéristiques identifiées dans le spectre (4, 5) pour l'échantillon sont comparées à une ou plusieurs caractéristiques de référence enregistrées dans l'unité de calcul, et au moins un constituant présent dans l'échantillon est identifié à l'aide d'un résultat de comparaison de caractéristiques, dans lequel de préférence, pour les caractéristiques identifiées, les degrés d'expression respectifs sont également comparés à des degrés d'expression de référence correspondants et une quantité du constituant dans l'échantillon est quantifiée à l'aide d'un résultat de comparaison de degré d'expression.

9. Procédé selon l'une quelconque des revendications précédentes, selon lequel le nombre est n>2.

10. Dispositif pour identifier une ou plusieurs caractéristiques spectrales dans un spectre (4, 5) d'un échantillon pour une analyse des constituants de l'échantillon, avec une unité de calcul,
**caractérisé en ce que**
l'unité de calcul est réalisée pour générer, à partir d'un spectre (4, 5) mis à disposition et d'une fonction d'approximation (6) prédéfinie, laquelle est une fonction mathématique différentiable de manière continue et approxime un comportement d'émission de l'échantillon en fonction de la longueur d'onde L avec un flou S, respectivement une dérivée de (n-1)-ième degré (7, 8, 9) du spectre (4, 5) et de la fonction d'approximation (6), dans lequel le nombre est n>1;
et l'unité de calcul est en outre réalisée pour générer, à partir des deux dérivées de (n-1)-ième degré (7, 8, 9), une matrice de corrélation (10) pour des longueurs d'onde L prédéfinies et des flous S prédéfinis, dans lequel la matrice de corrélation (10) décrit une corrélation entre la dérivée de la fonction d'approximation et la dérivée du spectre en fonction de la longueur d'onde L et du flou S, et est en outre réalisée pour identifier, pour au moins un extremum (i) local de la matrice de corrélation (10) en fonction de l'extremum (i) local respectif de la matrice de corrélation (10) respectivement la caractéristique spectrale ou l'une des caractéristiques spectrales, dans lequel la caractéristique respective est identifiée par des coordonnées de l'extremum (i) dans un espace de flou de longueur d'onde déterminé par la matrice de corrélation (10).
